# EUROPEAN PATENT APPLICATION

(11) **EP 2 165 946 A1**
(43) Date of publication of application: **24.03.2010**
(21) Application number: 08164913.9
(22) Date of filing: 23.09.2008
(51) Int. Cl.: B65G 1/137, G11B 17/22

(54) **Automatic apparatus for selecting, dispensing and collecting re-usable items**

(71) Applicant: 3M Innovative Properties Company, St. Paul, MN 55133-1000 (US)
(72) Inventor: Cabrero Gomez, Estrella, 28043 Madrid (ES); Alzola Ozaeta, María Concepción, 28023 Madrid (ES); Lozano, Rafael, 28027 Madrid (ES); Rojo, Rafael Gomez, 28011 Madrid (ES); Rojo, Angel Gomez, 28011 Madrid (ES); Martinez Cabanas, Julio, 28400, Collado Villalba Madrid (ES); Regalado Sanchez, Angel, 28400, Collado Villalba Madrid (ES)
(74) Representative: Hill, Cecilia Ann

(57) **Abstract**

The present invention relates to an automatic apparatus for selecting, dispensing and collecting re-usable items comprising
- at least one user interface (1) comprising a computer for selecting re-usable items and at least one device (6,7) for dispensing and/or collecting re-usable items,
- a storage system (2) for storing the re-usable items,
- a transportation system (3) for transferring the re-usable items between the storage system (2) and the at least one device (6,7) for dispensing and/or collecting reusable items,
wherein the re-usable items are stored and transferred within the apparatus by means of carriers but dispensed and/or collected carrier-less.

## Description

### Field

The present invention relates to an automatic apparatus for selecting, dispensing and collecting re-usable items such as books or audio, video or multi-media storage items such as CDs or DVDs, respectively. The automatic apparatus of the present invention comprises at least one user interface for selecting, dispensing and/or collecting re-usable items through one or more exit slots, a storage system for storing the re-usable items and a transportation system for transferring the re-usable items between the storage system and the at least one user interface.

### Background

Automated self-service systems suitable, for example, for borrowing and returning library items such as books, CDs and DVDs are advantageous over conventional libraries in that they do not require the presence of a library attendant for processing the borrowing and returning of the library items and can be operated around-the-clock. Automated self-service systems can be placed at convenient locations such as bus or rail-way systems or shopping malls and are thus much easier accessible than conventional libraries.

WO 02/47,077 discloses an automated article storage, dispensing and retrieval system which can process the borrowing and returning of library articles. The system comprises a housing in which the articles are storable; a database containing a record of each article stored in the housing; a dispensing mechanism operatively connected with the database for extracting individual articles from the housing for dispensing and a selection terminal being remotely located from the housing and operatively connected with the database and the dispensing mechanism. WO '077 discloses a specific embodiment of such automated system which is adapted for dispensing and collecting CDs.

WO 92/09,959 discloses an automated cartridge library system connected to at least one associated computer system for storing and retrieving a plurality of, for example, magnetic tape cartridges for placement into a number of drive elements which are connected to said computer system to read data from and write data onto the cartridges.

US 5,175,690 discloses a device and process for managing stores including, in particular, libraries, video rental shops, discotheques and archives. The system comprises a compartmented store in which the items such as, for example, books are stored; at least one robot for gripping said objects; conveyor means for transferring said items from the store to the user; and data-processing means capable of selecting the compartment in the store in which to store or from which to retrieve, respectively, such item. The books are each advantageously stored and processed in unitary cases which comprise a rigid upper part to which a supple bag such a blister-type packaging is attached. The storage compartments and the conveyor system each comprise two bars for receiving and processing the cases. The books are dispensed to the user together with a case, and the user needs to reinsert the books into the case when returning and feeding them back into the automated system.

The media dispenser disclosed in EP 1,616,825 and EP 1,616,823 is designed for dispensing media to customers but does not allow for collecting and re-dispensing the media.

In view of the above there is a need for an automated system for selecting, dispensing, collecting and/or re-dispensing re-usable items such as books or DVDs of different sizes and shapes in a reliable and cost-efficient way. It is another object of the present invention provides such an automated system, which is easy to use and does not require that the items are dispensed and collected in cases or carriers. Other objects of the present invention are apparent from the following detailed specification.

### Summary

The present invention relates to an automatic apparatus for selecting, dispensing and collecting re-usable items comprising at least one user interface comprising a computer for selecting re-usable items and at least one device for dispensing and/or collecting re-usable items; a storage system for storing the re-usable items; and a transportation system for transferring the re-usable items between the storage system and the at least one device for dispensing and/or collecting re-usable items; wherein the re-usable items are stored and transferred within the apparatus by means of carriers but are dispensed and/or collected carrier-less.

The present invention furthermore relates to a self-service method for dispensing re-usable items from an automatic apparatus according to the invention comprising the steps of:
(i) the user identification unit determines the identity of the user;
(ii) the user selects one or more re-usable items to be dispensed;
(iii) the carriers bearing a re-usable item are discharged from the storage system to the transportation system;
(iv) the carriers bearing a re-usable item are transferred to the dispensing device and dispensed carrier-less.

The present invention furthermore relates to a self-service method for returning re-usable items by a user to an automatic apparatus according to the invention comprising the steps of:
(i) the user identification unit determines the identity of the user;
(ii) the user inserts the re-usable item carrier-less into the collection device;
(iii) the re-usable item is inserted into a carrier;
(iv) the carrier bearing the re-usable item is transferred from the transportation system to the storage system; and
(v) the carrier bearing the re-usable item is stored in the storage system.

### Brief description of the figures

Fig. 1 is a schematic block diagram illustrating broadly the functional features of an automatic system according to a preferred embodiment of the present invention.
Fig. 2 is a schematic perspective view of the configuration of a preferred embodiment of the automated apparatus for dispensing and collecting re-usable items according to the invention.
Fig. 3a is a schematic perspective view of a preferred embodiment of a box-type carrier useful in the present invention.
Fig. 3b is a schematic perspective view of the side of the box-type carrier of Fig. 3a.
Fig. 4a is a schematic perspective view of a preferred embodiment of a storage system useful in the present invention.
Fig. 4b is a schematic perspective view showing the box-type carrier of Fig. 3a being inserted into the storage system of Fig. 4a.
Fig. 4c is a schematic perspective view of a preferred embodiment of a mounting device of a transportation system comprising discharging means suitable for discharging the carrier of Fig. 3a from the storage system of Fig. 4a to the transportation system.
Fig. 5a is a schematic perspective view of the front side of the user interface of a preferred embodiment of an automatic apparatus of the present invention.
Fig. 5b is a schematic perspective view of the back side of the user interface of Fig. 5a.

### Detailed description

The present invention relates to an automatic apparatus for dispensing and collecting re-usable items such as books or audio, video or multi-media storage items such as CDs or DVDs, respectively. The size of the automatic apparatus of the present invention is preferably selected so that it can be easily transported and installed, for example, at highly frequented public places such as, for example, railway or bus stations, in pedestrian zones, shopping malls or the like. This makes it easy for the user to borrow and return re-usable items without requiring in some cases two long trips to a conventional library, one to reserve and borrow the re-usable item and another to return it. In a preferred embodiment, the automatic apparatus may be referred to as self-serving kiosk or the like.

The automatic apparatus comprises a storage system for re-usable items so that re-usable items stored which have not been reserved by another user, can be directly dispensed to the user via the dispensing/collecting device accessible to the user at a user interface.

The user interface furthermore comprises a computer which can be directly, i.e. locally, or remotely accessed by the user. The computer comprises an output means such as a display and an input means such as a key board or keypad, a voice control unit or the like which can be operated locally. If desirable, a touch screen may be used which allows both entry and display of information. The user can also remotely check which re-usable items are stored in a specific automatic apparatus and reserve, for example, a specific item for a later local pick-up.

The computer preferably further includes a local operation system so that it controls the operation of the automatic system and transfers information such as user-specific information and the list of re-usable items borrowed out, reserved or stored at a given time, respectively, to a central management database.

The user interface preferably additionally comprises at least one user identification unit such as, for example, a card reader able to read and/or communicate with a library card or other means of identification of the user such as, for example, a state ID card, a driver's license or a credit card. The reader may include, for example, a barcode scanner capable of reading a barcode on such identification means or it may be an RFID reader communicating, for example, with an IC chip on the identification means in a contact or a contact-less mode, respectively. In a preferred embodiment the user identification unit is also adapted to read the identifier such as a barcode or an RFID tag or the like which may be attached to the re-usable item. The user can then simply put a re-usable item to be returned to the apparatus, onto the user identification unit. The user identification unit reads the identifier of the re-usable item and the identity of the user who had borrowed the re-usable item is provided, for example, by the central management database.

At the user interface a user can access the dispensing and collecting devices of the automatic apparatus of the invention which dispenses the re-usable items the user wants to borrow and accept the re-usable items the user wants to return, respectively. While the dispensing and collecting devices may be separate devices, it is also possible that the dispensing and collecting of the re-usable items is effected through a single combined collecting/dispensing device. It is also possible, for example, that the user can access the collecting and dispensing device through a common exit slot but that other parts of such devices are different from each other. The re-usable items are preferably marked by an identifier such as, for example, a bar code or an RFID tag. The dispensing and/or collecting devices preferably exhibit one or more identification units such as, for example, readers capable of reading such identifier of the re-usable item and communicating this information to the local computer and/or the central management database.

When locally accessing the computer, the user will present his identification means such as, for example, a library card for identification. Identification might also be done by a biometrical method using, for example, a fingerprint or iris reader or sensor. If the user cannot be identified or the identification token is not valid the interaction process may be terminated. The computer may also check, for example, whether there are any outstanding fees and will charge those to a money depository which may be attached, for example, as a money chip to the user identification means such as, for example, an identification card or a library card. It may also be possible that a user account is administrated at the central management database to which money can be transferred, for example, from a usual bank account. In the same way regular lending fees may be charged to the library card and/or a user account before dispensing a re-usable item selected by the user.

After the identification step the user will enter his or her request into the computer which could be, for example, a request for displaying a list of re-usable items stored in the storage system for immediate borrowing, a request for dispensing a re-usable item available in the storage system and/or a request for reserving a re-usable item which is presently lent out and therefore presently unavailable and/or the expected return date for re-usable items presently unavailable. The user can also access the central management database via the computer and request, for example, to check the availability of re-usable items which do not form part of the regular inventory of the local automatic apparatus, in other automatic apparatus installed at a different location or in a central depository such as a central library. The user may then further request, for example, that such item be made available and stored in the local automatic apparatus for example during the next regular maintenance operation.

If a re-usable item is to be dispensed, the transportation system is directed to the corresponding storage location in the storage system where the selected re-usable item is stored. It is preferred in the present invention that the re-usable items are transferred and stored within the automatic apparatus by means of carriers but dispensed and collected carrier-less. It was found by the present inventors that such system which can be set up in a simple, reliable and cost-effective way, allows to process re-usable items of different formats and sizes such as, for example, books and CDs/DVDs.

The storage system may be a conventional storage system having a plurality of shelves arranged in parallel to each other whereby the distance between adjacent shelves can be varied. The shelves are usually attached to struts, bars, racks or the like vertically extending relative to the shelves. In the following the vertical elements are referred to as racks although their shape may vary widely. The distance between adjacent racks of the storage system may be varied if desirable. The storage locations provided by the plurality of shelves and racks preferably exhibit different sizes so that they can accommodate carriers of different sizes. Each storage location preferably accommodates one carrier, though several carriers may also be stored in a single storage location.

In a preferred embodiment the carriers are stored in the storage system so that the carrier forms the storage location within the storage system and provides, in particular, the shelve of the storage location a re-usable item may be placed upon. This allows an individual variation of the size of the respective storage locations by choosing an appropriately sized carrier depending on the size of the re-usable items so that the storage space is utilized more efficiently as compared to a situation where a fixed, pre-determined size of the storage locations is used.

An individual carrier preferably does not have a fixed storage location assigned to it but is stored stochastically at a location which has an appropriate size to accommodate the respective carrier to be stored and which is empty at the time of use. This method makes effective use of the storage capacity of the storage system. It also allows, for example, that the number of books in circulation is higher than the storage capacity of the storage system itself.

The carrier may be, for example, a two-dimensional plate made from metal or a durable plastic onto which the re-usable item is placed. The two-dimensional plate may have, for example, a quadratic or rectangular shape, though other shapes are also possible. In case of rectangular carrier plates the storage system may comprise vertical racks arranged in parallel at a distance corresponding, for example, to one side of the rectangular carrier plate referred to above and below as its width. The other side of the rectangular carrier plate is termed as its length. The racks may comprise a plurality of grooves arranged next to each other and extending normal to the vertical extension of the racks. The shape of the grooves may vary broadly. A groove may be formed, for example, by two indentations having an essentially rectangular cross-section and an essentially flat recession between the two rectangular indentations. The grooves may also exhibit, for example, a curved or polygonal cross-section. While the width of such grooves may vary broadly, it is preferably chosen so that it can mechanically engage with part of the carrier thereby holding the carrier in the storage system. For a plate-shaped carrier, the width of the grooves in the direction of the vertical extension of the racks preferably is higher than the thickness of the carrier plates. The grooves on the two sides of two adjacent racks facing each other are preferably arranged so that they can mechanically engage with the corresponding parts of the carrier in order to hold and secure the carrier in the storage system. For plate-type carriers or box-type carriers comprising a base plate, respectively, the grooves are preferably arranged in parallel and directly opposite to each other so that the plate-shaped carrier bearing the re-usable item can be inserted between the corresponding grooves of two adjacent racks. The width of a rectangular carrier plate arranged normal to the surfaces of the racks preferably corresponds to the distance between the racks so that the carrier plate is reliably secured. If desirable, rectangular plate-shaped carriers having different values of the width may be used. In such case the racks are preferably arranged in different distances to accommodate rectangular, plate-shaped carriers with a different width bearing re-usable items of different sizes. The length of the rectangular, plate-shaped carriers having different values of the width is preferably the same and corresponds to the depth of the racks.

Other shapes of the carrier may be used if desirable. The carrier may be, for example, a box to provide a higher mechanical strength to the carriers. In a preferred embodiment the box is open at its front and back side and comprises a base plate, two side walls vertically extending from the base plate and, optionally, a top plate which is opposite to the base plate. The top plate, if present, makes the box-type carrier mechanically more stable and protects the re-usable item stored therein from dust. The base plate preferably has a quadratic or rectangular shape and the side walls are preferably arranged in parallel to the length sides of the base plate extending in parallel to the depth of the racks. The front and back sides of the box-type carrier extending along the width of the base plate, are preferably open so that the carrier box can be easily accessed from the back and the front, respectively. The side walls are preferably slightly offset from the outer lengthwise edges so that the base plate exceeds beyond the side walls thereby forming flat protrusions or wings which preferably are engageable with corresponding grooves arranged on the racks as described above. This allows box-type carriers to be inserted into the storage system so that their base plate forms the shelf of the storage location in which the re-usable item is stored. The storage location itself is thus essentially formed by the carrier.

If the user requests dispensing of a re-usable item available in the storage system, the re-usable item is transferred from the corresponding storage location to the transport system which conveys the re-usable item to the dispensing device accessible at the user interface. The transport system may include, for example, a Cartesian X-Y- or X-Y-Z positioning system configured so that it can access the various storage locations and the dispensing device, respectively. The X-Y or X-Y-Z positioning system preferably comprises a mounting device such as a support table which accepts the carrier bearing the re-usable item from the corresponding storage location and allows for its safe transfer to the dispensing device at the user interface. The mounting device is preferably positioned in front of the respective storage location so that the carrier bearing the re-usable item can be discharged to the mounting device, for example, by means of a push-bar movably arranged behind the storage system. This can be effected, for example, in the case of a box-type carrier by positioning the mounting device of the transport system such as, for example, a rectangular support table essentially directly in front of the base plate of the carrier box so that the front width side of the base plate and the back width side of the support table are essentially flush but slightly offset in the vertical direction by the thickness of the base plate of the carrier so that the box-type carrier can easily be pushed over.

If desirable, one or both side walls of the box-type carrier may exhibit a series of notches, protrusions and/or other mechanical elements that are engageable with complementary mechanical elements arranged on the discharging device of the mounting device of the transportation system. If the side walls of the carrier exhibit notches, the discharging device may preferably exhibit protrusions engageable with such notches and so on. In a preferred embodiment, the mounting device comprises a discharging device comprising a belt driving device. The belt driving device preferably comprises at least one belt having a multitude of mechanical elements which are engageable with the complementary mechanical elements in the side walls of the box-type carrier. The belt(s) preferably are endless and driven by rollers within the belt driving device. In another embodiment the belt(s) are non-endless (*i.e.,* finite) and can preferably be moved back and forth in a direction normal to the width of the base plate of the box-type carrier. In both embodiments the belts are brought into interaction with the mechanical elements on the side walls of the carriers so that the carriers are moved from the storage location to the mounting device and *vice versa.* The distance between a belt and an opposite guiding wall or between two belts, respectively, corresponds essentially to the width between the side walls of the carrier. The belt(s) preferably exhibit a force, for example by means of a spring mechanism, in a direction perpendicular to the side walls so that the carriers are fixed when discharging them from the storage location to the mounting device or *vice versa.*

The carrier bearing the re-usable item is transferred by the transportation system to the dispensing means which may comprise, for example, a push-bar. In a preferred embodiment, the carrier such as a plate-type or box-type carrier is arranged by the transportation device directly in front of an exit slot of the dispensing device so that the re-usable item borne by the carrier can be dispended to the user by means of a push-bar after the exit slot has been opened. The push-bar is arranged, for example, behind the open back-side of a box-type carrier device and the push-bar is dimensioned so that it can be inserted through such open back side into the carrier to push out the re-usable item. The plate-type carrier or the base plate of a box-type carrier are, respectively, positioned before the exit slot so that the re-usable item can be pushed out.

The empty carrier can subsequently be returned by the transportation system, for example, to the storage system where it is stored for future use. Alternatively, it is also possible that the empty carrier is stored in a buffer storage more closely arranged to the user interface.

Likewise, if the user wants to return a re-usable item and requests the automatic system of the present invention to collect the re-usable item, the transportation system places in such preferred embodiment a carrier having a size appropriate for the size of the re-usable item directly in front of the exit slot. When the exit slot is opened, the user inserts the re-usable item through such exit slot thereby positioning the re-usable item on the plate-type carrier or the base plate of the box-type carrier. If desired, the push-bar may be positioned at the back side of the carrier to prevent the user from pushing the re-usable item beyond the carrier and further into the apparatus. The carrier loaded with a re-usable item is then transferred to the storage system and stored in an appropriately dimensioned storage location.

It is possible in the present invention that the dispensing device and the collecting device are, respectively, different from each other and/or comprise one or more different parts. It is alternatively also possible to provide a combined device which can be operated both as a dispensing and collecting device.

The preferred embodiments of the dispensing and collecting devices referred to above are given by example only without limiting the scope of the present invention. The preferred embodiment is of a particularly simple and reliable construction. The collection device of such preferred embodiment, for example, essentially comprises only the exit slot and an empty carrier temporarily included in the device. When returning the re-usable item, the user places it into an empty carrier which then can be processed by the transportation system. Likewise, the dispensing device of such preferred embodiment comprises the exit slot and a push-bar whereby a carrier loaded with a re-usable item is temporarily arranged between the exit slot and the push-bar. This embodiment of the dispensing and collecting devices, respectively, which temporarily includes the carriers into such devices is preferred because it allows for a particularly simple and reliable construction of the devices and of the automatic apparatus. It is, for example, not required for the re-usable item to be placed at a specific predetermined position within the collection device to allow for a pick-up by the transportation system. In the preferred embodiment, the re-usable item is upon its return placed by the user into a carrier whereby a precise positioning of the re-usable item is not required because the re-usable item is processed via the carrier in which it is placed.

The re-usable item is preferably marked by an identifier which can be read by a corresponding reading device arranged for example in the collecting device and/or dispensing device. The local operating system obtains the geometrical dimensions of the re-usable item sitting, for example, in the collecting device and arranges for the transfer of an appropriately dimensioned empty carrier from the storage system or the buffer storage to the collecting device. Prior to its dispensing, a re-usable item, is preferably identified by a reading device and checked out, for example, in the central management database. If desirable, the collecting device may additionally require means to verify the identity of the re-usable item to be returned before accepting it in order to prevent fraud. Such means may include, for example, in case of a book, a CD or the like a means for measuring the size or weight of such item and comparing the measured data against the corresponding data stored on the central management database. In another embodiment such means may include imaging means capable of comparing the image of the item to be returned against a stored image of the item.

The automatic apparatus of the present invention is characterized in that the re-usable items are processed within the apparatus together with carriers bearing them while the discharging of the re-usable items to the user or the collection of the re-usable items from the user is effected without a carrier (i.e., carrier-less). In a preferred embodiment, each carrier bears one re-usable item. The automatic apparatus of the present invention is advantageous to the user who can pick up the re-usable item as such without having to bother with a carrier when picking it up or returning it. Storing of re-usable items together with a carrier is especially advantageous when the re-usable items do not exhibit a uniform format; this is typical, for example, for re-usable items of libraries which comprise both books and multimedia products such as CDs or DVDs. Storing of such re-usable items with a widely differing format together with the respective carrier allows for a particularly efficient utilization of the storage capacity. Processing of re-usable items together with the respective carrier also allows for a simple, cost-effective design of an automatic apparatus. It is, for example, possible to use a Cartesian X-Y- or X-Y-Z positioning system as the transportation system within the automatic apparatus thereby avoiding a more complex design such as a handling robot.

In another aspect, the invention also provides an advantageous method for selecting, dispensing and collecting re-usable items. The method allows, in particular, for repeated collecting and dispensing cycles of the re-usable items and, in particular, of a same re-usable item.

The method for dispensing re-usable items requires in a first step the determination of the user identity. In such step the user locally accesses the user interface and presents his identification means (such as a library card or other means) to the reader of the automatic apparatus. If the card is not valid or the user cannot be identified the requested dispensing operation may be terminated. If the user is identified the system may check first whether there are any outstanding fines which have not been paid by the user or if the user has reached the limit of his loan entitlement. If there are outstanding fines, the user will be required to pay the fines before he can proceed with lending out re-usable items. The outstanding amount may be booked off, for example, from a money chip on the library card or charged to an account of the user administrated at the central management database. If the loan entitlement has been reached the user will be required to return at least one re-usable item before proceeding with the loan.

In a second step the user may select re-usable items from a list provided, for example, by the central management database. If the selected re-usable item is presently lent out the user may enter a reservation for one or more re-usable items so that these can be picked up at a later point in time. Alternatively, it is possible that the user checks the re-usable items presently available in a specific automatic apparatus via remote access, and he can remotely reserve selected items for a later pick-up.

If the user has selected an item available in the storage system, it will be discharged in a third step from the storage system and provided to the transportation system.

The selected re-usable item(s) are transferred in a fourth step to the dispensing device accessible by the user. The re-usable item is preferably identified by a reader in the dispensing device and checked out which may include, for example, charging of a lending fee to the money chip on the library card. The exit of the dispensing device is then released so that it opens either automatically or manually by the user., The user can then retrieve the item. If the user requests that more than one re-usable item be dispensed, steps 3 and 4 are preferably re-iterated so that the next re-usable item is discharged from the storage system to the transportation system and so on.

The method for returning re-usable items requires in a first step the determination of the user identity as has been described above in the method for dispensing re-usable items.

In a second step the opening of the collection device is released and the user inserts the re-usable item without a carrier into such device where it is identified by the reader. In an alternative embodiment, the identification of the re-usable item may have already been performed in the first step as part of the user identification. In such case the user identification corresponding to a specific, identified re-usable item is obtained, for example, from the central data management system. If the predetermined lending period for the re-usable item has been exceeded a corresponding surcharge fine may be booked off, for example, from a money chip on the library card. The local operating system is provided with information about the geometrical dimensions of the re-usable item and orders the transportation system to provide an appropriately dimensioned carrier. If desirable, the identity of the re-usable item to be returned can additionally be verified before accepting such item, for example, to prevent fraud. Means to verify the identity of the re-usable item may include, for example, in case of a book, a CD or the like that the size or weight of such item is measured and compared to the corresponding data stored on the central management database or that such item is compared against a stored image of the item.

The re-usable item is placed in a third step into the carrier. In a preferred embodiment steps 2 and 3 may be combined into one step by requiring the user to place the re-usable item directly into the carrier.

The reusable item is transferred in the fourth step by the transportation system to the storage system. Finally, in a fifth step, the reusable item is stored together with a carrier bearing it in the storage system.

The invention will now be further illustrated by describing a specific embodiment of an automatic apparatus shown in the Figures. The specific embodiment is meant to be illustrative but not restrictive in any way.

### Detailed description of the figures

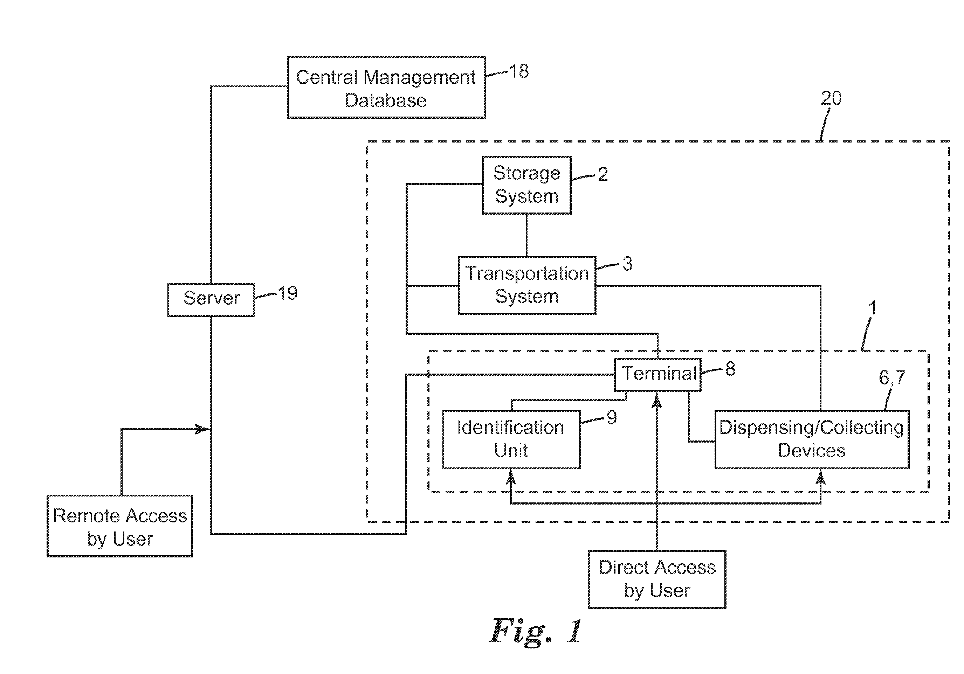

Fig. 1 is a schematic block diagram illustrating broadly the functional features of an automatic system 20 according to a preferred embodiment of the present invention. The system comprises a user interface 1 comprising a computer 8, a collecting device 6, a dispensing device 7 and a user identification unit 9. The collecting device 6 and the dispensing device 7 may be separate devices or combined into one dual-functional device. The computer 8 comprises a display 10 and a communication interface such as a key board (not shown) allowing the user to provide information such as requests for reserving, lending out and/or returning re-usable items to the automatic system 20. The computer preferably comprises a local operating system for steering the dispensing and collecting process. The user can access the user interface 1 locally, i.e., at the spot where the automatic apparatus 20 is installed. The user can also access the computer 8 remotely to check, for example, the list of re-usable items 4 stored in the automatic system at a given point in time and make reservations for re-usable items 4 he wants to pick up in the near future.

The automatic system 20 furthermore comprises a storage system 2 for storing the re-usable items 4 (not shown in Fig. 1) within the automatic system 20. The automatic system 20 furthermore comprises a transportation system 3 for transferring the re-usable items 4 from the storage system 2 to the dispensing device 7 or from the collecting device 6 to the storage system 2, respectively.

The computer 8 of the automatic system 20 is operatively connected via a server 19 to a central management database 18. The central management database 18 is furthermore operatively connected to a multitude of automatic systems 20 and provides information to the server 19 regarding, for example, the availability of re-usable items 4, the user's transaction history and loan status, etc.

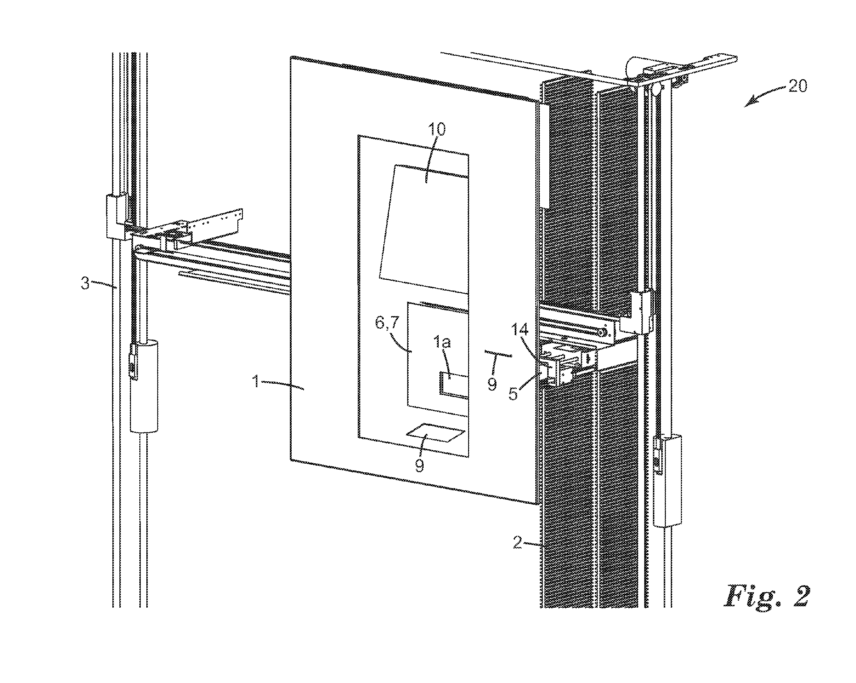

Fig. 2 is a schematic perspective view of the configuration of a preferred embodiment of an automated apparatus 20 according to the invention. The apparatus 20 can be locally accessed via the user's interface 1 comprising a display 10, two user identification units 9 and the exit slot 1 a of the collecting/dispensing device 6,7. One of the user identification units 9 is a large-scale reader which can also receive re-usable items for identification. The other identification unit 9 can be accessed via a slit through which a library card may be introduced, for example. The display 10 is preferably set up as a touch-screen display so that it can also be used as a keypad to provide information to the local operating system or the central management database, respectively. The system furthermore comprises a storage system 2 and a Cartesian X-Y positioning system.

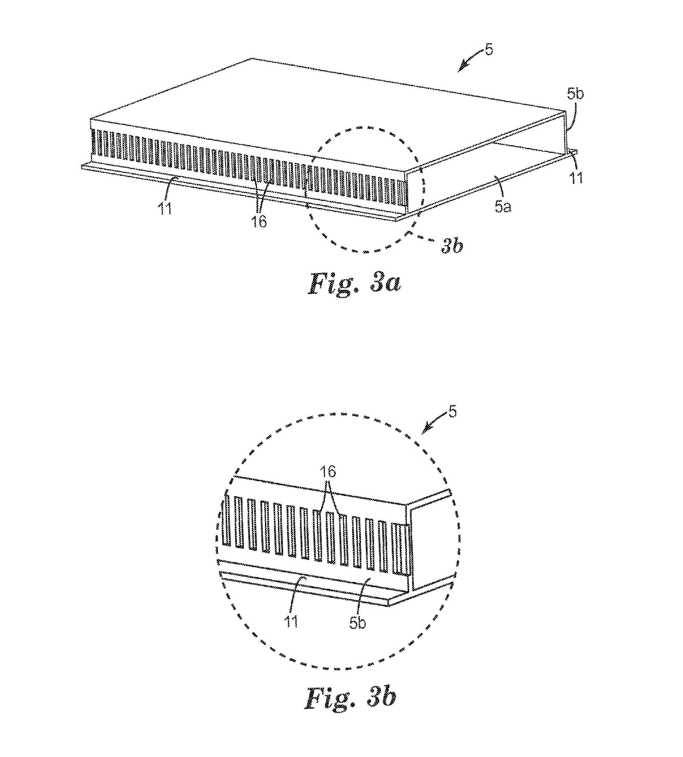

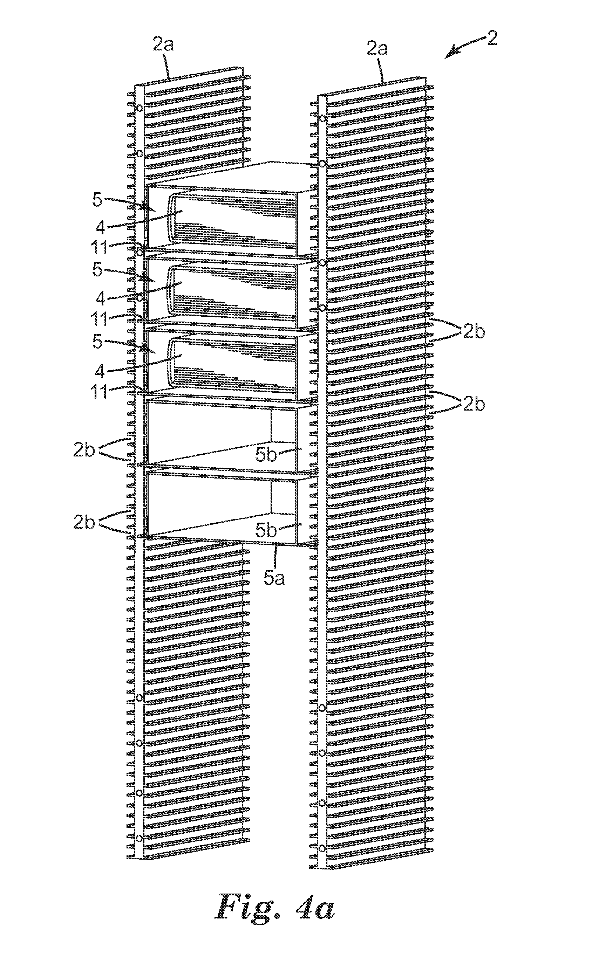

Fig. 3a is a schematic perspective view of a preferred embodiment of a box-type carrier 5 useful in the present invention. The box-type carrier 5 comprises a base plate 5a and side-walls 5b vertically arranged on the base plate 5a. The side walls 5b are slightly off-set from the adjacent edges of the base plate 5a thereby forming wings 11 which can be inserted into the grooves 2b of the racks 2a of the storage system 2 (shown in Fig. 4a). The side walls 5b comprise a multitude of notches 16 which are rectangular in shape and which are arranged equidistantly and parallel to each other.

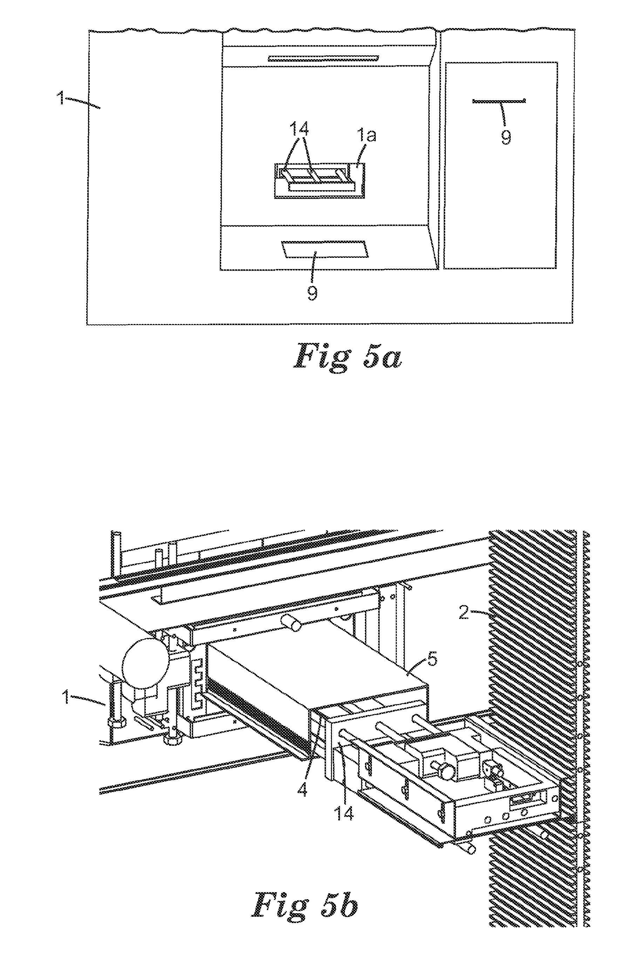

Fig. 3b is an enlarged schematic perspective view of the side wall 5b of the box-type carrier of Fig. 5a of the carrier of Fig. 3a.

Fig. 4a is a schematic perspective view of a preferred embodiment of a storage system 2 useful in the present invention. The storage system 2 comprises racks 2a which are arranged in parallel in a distance corresponding to the width of the base plate 5a of the box-type carriers 5. The racks 2a comprise a multitude of grooves 2b which are engageable with the wings 11 of the box-type carriers 5 so that the box-type carriers 5 are held in place by virtue of the wings 11 resting on the grooves 2b. Thus, the box-type carriers 5 form storage locations within the storage system 2.

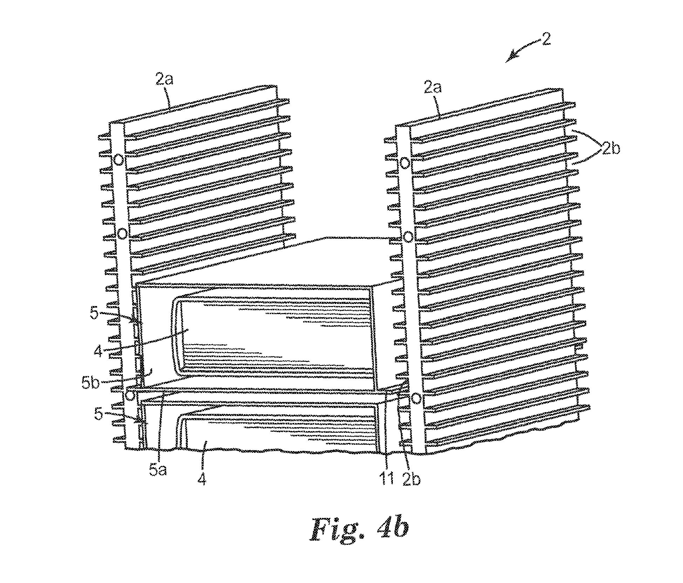

Fig. 4b is an enlarged schematic perspective view showing a box-type carrier 5 bearing a re-usable item 4 which is inserted between the racks 2a of the carrier system 2. The racks comprise a multitude of grooves 2b which are formed in each case by two small adjacent protrusions having an essentially rectangular cross-section and an essentially flat recession between protrusions. The wings 11 formed on both sides of the carrier 5 by the portions of the base plate 5a exceeding beyond the side walls 5b, rest on the protrusions of the grooves thereby holding the carrier in place. The carrier 5 forms a storage location within the storage system loaded with one re-usable item 4.

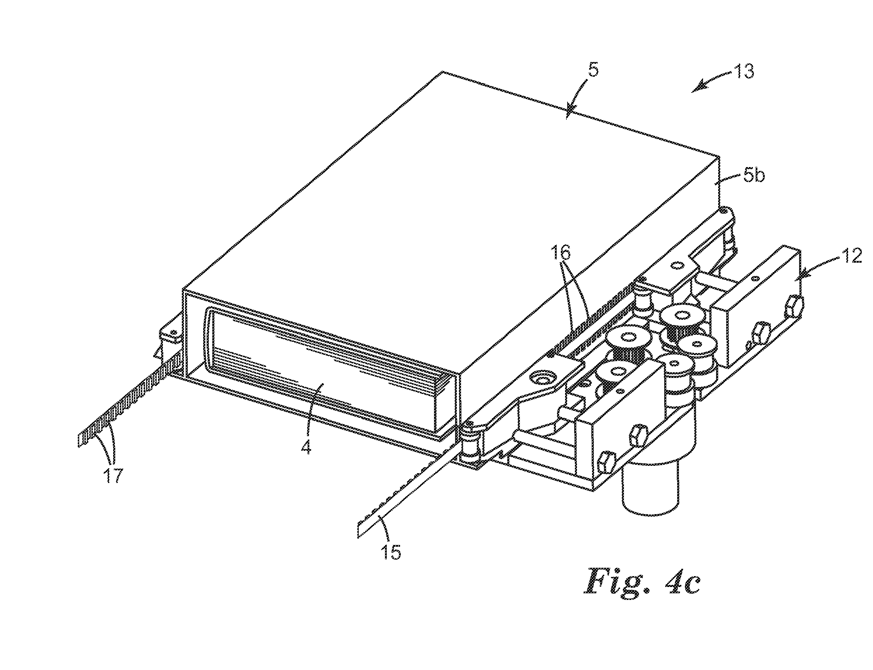

Fig. 4c is a schematic perspective view of a preferred embodiment of the mounting device 13 of the transportation system 3. The mounting device 13 comprises a belt driving device 12 operating finite belts 15 having on their respective inner sides facing the box-type carrier 5 a multitude of protrusions 17 engageable with the notches 16 on the side walls 5b of the box-type carrier 5. When operated, belt 15 longitudinally moves the box-type carrier 5 in the direction of the belts. Depending on the direction of the movement of the belts 15 (towards the storage system 2 or away from the storage system 2, respectively) the box-type carrier is moved from the mounting device 13 into the storage system 2, or out of the storage system 2 to the mounting device 13.

Fig. 5a is a schematic perspective view of the front side of the user interface 1 of a preferred embodiment of an automatic apparatus 20 of the present invention. User interface 1 has an exit slot 1 a forming part of the collecting and dispensing devices 6, 7. An exit slot 1 a is shown in Fig. 5 in the opened state so that the push-bar 14 of the dispensing device 7 can be seen through the exit slot 1 a. A push-bar 14 is in the expanded position so that a re-usable item 4 has just been discharged via the exit slot 1a.

Fig. 5b is a schematic perspective view of the back side of the user interface 1. A box-type carrier 5 has been positioned behind the exit slot 1 a of the collecting and dispensing devices 6 and 7. The dispensing device 7 furthermore comprises a push-bar 14 arranged behind the box-type carrier 5 in a retracted position; the device operating the push-bar 14 is attached in a fixed position in the storage system 2 so that the push-bar 14 is arranged opposite to the exit slot 1a. The distance between the exit slot 1 a and the push-bar 14 in its retracted state is selected so that a box-type carrier 5 can be positioned between the exit slot 1a and the push-bar 14. Fig. 5b shows the situation prior to discharging a re-usable item 4 from the box-type carrier 5. Push-bar 14 is in a retracted (closed) position, and exit slot 1 a (not shown) has not yet been opened. Once exit slot 1 a is opened, the push-bar is moved ahead towards its expanded (open) position (shown in Fig. 5a) thereby dispensing the re-usable item 4 from the box-type carrier through the opened exit slot 1 a (not shown) to the user.

### List of reference signs

- 1: user interface
- 1 a: exit slot of combined collecting/dispensing device 6,7 which can be opened
- 2: storage system
- 2a: rack of storage system 2a
- 2b: grooves
- 3: transportation system
- 4: re-usable items
- 5: carrier
- 5a: base plate of carrier 5
- 5b: side walls of carrier 5
- 6: collecting device 6
- 7: dispensing device 7
- 8: computer
- 9: user identification unit
- 10: display
- 11: wings
- 12: discharging device
- 13: mounting device 13 of transportation system 3
- 14: push-bar
- 15: belt of belt-driving device 12
- 16: notches
- 17: protrusions
- 18: central management database
- 19: server
- 20: automatic apparatus

## Claims

1. Automatic apparatus (20) for selecting, dispensing and collecting re-usable items (4) comprising
- at least one user interface (1) comprising a computer (8) for selecting re-usable items (4) and at least one device (6, 7) for dispensing and/or collecting re-usable items (4),
- a storage system (2) for storing the re-usable items (4),
- a transportation system (3) for transferring the re-usable items (4) between the storage system (2) and the at least one device (6, 7) for dispensing and/or collecting re-usable items (4),
wherein the re-usable items (4) are stored and transferred within the apparatus (20) by means of carriers (5) but dispensed and/or collected carrier-less.

2. Automatic apparatus according to claim 1 wherein each carrier (5) comprise a plate (5a) adapted to bear a re-usable item (4).

3. Automatic apparatus according to claim 2 wherein the plate (5a) forms a shelf of the storage system (2).

4. Automatic apparatus according to claim 3 wherein the plate (5a) comprises lateral wings (11) engageable with grooves (2b) of the racks (2a) of the storage system (2).

5. Apparatus (20) according to any of the preceding claims wherein the transportation system (2) is an X-Y-Z positioning system.

6. Apparatus according to claim 5 wherein the transportation system comprises a mounting device (13) supporting the carrier (5).

7. Apparatus according to claim 6 wherein the mounting device (13) comprises discharging means (12) for transferring the carrier 5 from the storage system 2 to the mounting device (13).

8. Apparatus according to claim 7 wherein the discharging d (12) comprises belt driving means mechanically engaging with the carrier (5).

9. Apparatus according to any of the preceding claims wherein the dispensing means (7) for dispensing the re-usable items (4) comprises a push-bar (14).

10. Apparatus according to any of the preceding claims wherein the re-usable items (4) are selected from the group comprising media products such as books or an audio, video or multi-media storage items.

11. Apparatus according to any of the preceding claims wherein the re-usable items (4) exhibit a non-uniform shape.

12. Self-service method for dispensing re-usable items (4) from an automatic apparatus (20) according to any of claims 1-11 to a user comprising the steps of:
(i) the user identification unit (9) determines the identity of the user;
(ii) the user selects one or more re-usable items (4) to be dispensed;
(iii) the carriers (5) bearing a re-usable item (4) are discharged from the storage system (2) to the transportation system (3); and
(iv) the carriers (5) bearing a re-usable item (4) are transferred to the dispensing device (6) and dispensed carrier-less.

13. Self-service method for returning re-usable items (4) by a user to an automatic apparatus (20) according to any of claims 1-11 comprising the steps of:
(i) the user identification unit (9) determines the identity of the user;
(ii) the user inserts the re-usable item (4) carrier-less into the collection device (6);
(iii) the re-usable item is inserted into a carrier (5);
(vi) the carrier (5) bearing the re-usable item (4) is transferred from the transportation system (3) to the storage system (2); and
(vii) the carrier bearing the re-usable item (4) is stored in the storage system (2).

14. Method according to claim 13 wherein steps (ii) and (iii) are performed such that the user inserts the re-usable item (4) carrier-less via the collection device (6) into a carrier (5).

15. Self-service method for dispensing and collecting re-usable items wherein the re-usable items is re-dispensed and/or re-collected by sequentially re-iterating the method according to claims 12 - 14, respectively.
